(19) Europäisches Patentamt
European Patent Office
Office européen des brevets

(11) Veröffentlichungsnummer: **0 022 546**
**A2**

(12) # EUROPÄISCHE PATENTANMELDUNG

(21) Anmeldenummer: **80103893.6**

(22) Anmeldetag: **08.07.80**

(51) Int. Cl.³: **C 07 F 9/53**, C 07 F 9/32

(30) Priorität: **11.07.79 DE 2927916**

(43) Veröffentlichungstag der Anmeldung: **21.01.81 Patentblatt 81/3**

(84) Benannte Vertragsstaaten: **BE CH DE FR GB IT LI NL**

(71) Anmelder: **HOECHST AKTIENGESELLSCHAFT, Zentrale Patentabteilung Postfach 80 03 20, D-6230 Frankfurt/Main 80 (DE)**

(72) Erfinder: **Felcht, Utz-Hellmuth, Dr., Kaiserstrasse 99, D-6793 Bruchmühlbach (DE)**

(54) **Verfahren zur Herstellung von 1-Oxophospholan-chlorhydrinen sowie einige spezielle dieser Verbindungen.**

(57) 1-Oxo-phospholan-chlorhydrine werden hergestellt durch Umsetzung von 1-Oxo-phospholenen mit Chlor in Gegenwart von Chlorwasserstoff bindenden Basen im Molverhältnis von etwa 1:1:1 in Wasser, gegebenenfalls im Gemisch mit einem mit Wasser mischbaren inerten organischen Lösungsmittel. Die Umsetzungsprodukte sind größtenteils neue Verbindungen, die hauptsächlich als Zwischenprodukte auf dem Gebiet der Kunststoffe, der Hydraulikflüssigkeiten und der Katalysatoren für die Umwandlung von Isocyanaten in Carbodiimide verwendet werden.

EP 0 022 546 A2

Verfahren zur Herstellung von 1-Oxophospholan-chlorhydrinen sowie einige spezielle dieser Verbindungen

Die 1-Oxo-phospholan-chlorhydrine, von welchen in dieser Anmeldung gesprochen wird, sind isomere Verbindungen der Formeln Ia und Ib:

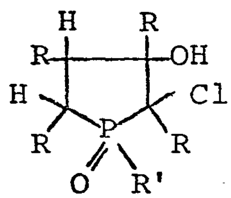

(Ia)

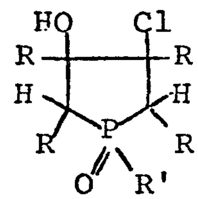

(Ib)

worin die Reste R, welche gleich oder verschieden sein können, Wasserstoff, organische Reste und/oder Halogen und R' einen organischen Rest oder einen über Sauerstoff gebundenen organischen Rest bedeuten.

Die Verbindungen sind Zwischenprodukte auf verschiedenen Sachgebieten.

An 1-Oxo-phospholan-chlorhydrinen der Formeln Ia und Ib ist bisher lediglich das 3-Chlor-3,4-dimethyl-4-hydroxy-1-phenyl-1-oxo-phospholan bekannt [SU-PS 225 187; B.A. Arbuzov, A.P. Rakov und A.O. Vizel, Izv. Akad.Nauk. SSSR (Engl.Transl.) 1969, 2079]; die Verbindung besitzt die Formel II:

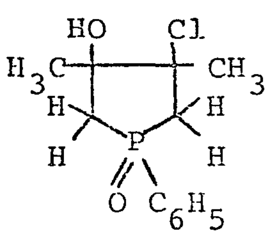

(II)

(II)

Ihre Herstellung erfolgt durch Ringöffnung des entsprechenden 3,4-Epoxy-1-oxo-phospholans in Äther mit trockenem Chlorwasserstoff in 80 %iger Ausbeute. Das hierzu benötigte 3,4-Dimethyl-3,4-epoxy-1-phenyl-1-oxo-phospholan wird zuvor aus 3,4-Dimethyl-1-phenyl-1-oxo-$\Delta^3$-phospholen und Peressigsäure in 74 %iger Ausbeute bereitgestellt [vgl. B.A. Arbuzov, A.P. Rakov, A.O. Vizel, L.A. Shapshinskaya und N.P. Kulikova, Izv. Akad.Nauk.SSSR (Engl. Transl.) 1968 1237]. Die zwei Stufen der Reaktion lassen sich durch folgende Formelgleichungen wiedergeben (vgl. Gl. 1a und 1b):

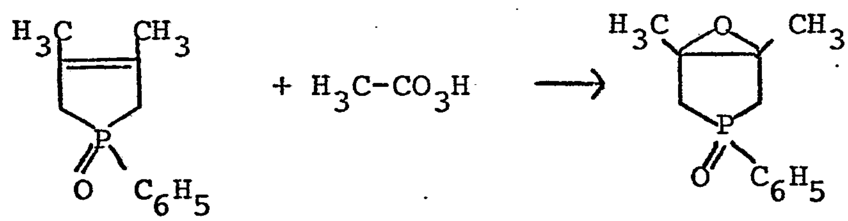


(1a)

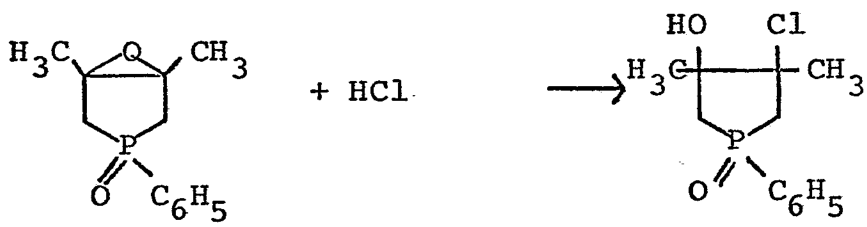


(1b)

(II)

Für die technische Durchführung und eine Erweiterung über den Spezialfall der Herstellung von II hinaus ist die Zweistufensynthese jedoch aufwendig und nicht genügend wirtschaftlich, da einerseits - bezogen auf das Ausgangs-1-oxo-$\Delta^3$-phospholen - nur eine Ausbeute von 59 % erreicht wird und es sich andererseits um eine zweistufige Synthese handelt, die mit beträchtlichem Zeit- und Materialaufwand

verbunden ist.

Es war daher wünschenswert und bestand die Aufgabe, ein einfacheres und wirtschaftlicheres Verfahren zu entwickeln, welches sich außer auf die Herstellung des bekannten 1-Oxo-phospholan-chlorhydrins II auch auf die Herstellung anderer - neuer - 1-Oxo-phospholan-chlorhydrine anwenden läßt.

Diese Aufgabe konnte erfindungsgemäß in einfacher und befriedigender Weise, ausgehend von 1-Oxo-phospholenen, dadurch gelöst werden, daß man 1-Oxo-phospholene mit Chlor in Gegenwart von Chlorwasserstoff bindenden Basen im Molverhältnis von etwa 1:1:1 in Wasser, gegebenenfalls im Gemisch mit einem mit Wasser mischbaren inerten organischen Lösungsmittel, umsetzt.

Die Umsetzung von Olefinen mit Chlor und Wasser zu 1,2-Chlorhydrinen ist im Prinzip bekannt (vgl. R. Stroh in: Houben-Weyl, Methoden der org. Chemie, G. Thieme Verlag Stuttgart, 1962, Bd. V/3, S. 768 ff.) jedoch verläuft die Reaktion häufig unter gleichzeitiger Bildung von 1,2-Dichlorverbindungen als Konkurrenzprodukten (vgl. R.Stroh, ibid. S.771).

Es war daher außerordentlich überraschend, daß bei dem erfindungsgemäßen Verfahren hohe bis nahezu quantitative Ausbeuten an den gewünschten 1-Oxo-phospholan-chlorhydrinen erhalten werden, ohne daß die Bildung von entsprechenden 1-Oxo-phospholan-2,3- bzw. - 3,4-dichlor-Produkten beobachtet wird. Diese Tatsache ist umsomehr überraschend, als - wie eigene Versuche gezeigt haben - die entsprechende Reaktion von 1-Oxo-phospholenen mit Brom (anstelle von Chlor) ausschließlich 1-Oxo-2,3- bzw. -3,4-dibromphospholane - und praktisch keine Bromhydrine - liefert.

Es war weiterhin überraschend, daß bei der Verwendung solcher 1-Oxo-phospholene als Ausgangsprodukte, welche am Phosphor eine Alkoxygruppe als Substituenten tragen, die so vorliegende Phosphinsäureesterfunktion unter den Versuchsbedingungen in wässrig-saurer Lösung nicht gespalten wird.

Schließlich war die glatte Bildung von 1-Oxo-phospholan-chlorhydrinen aus 1-Oxo-phospholenen, Chlor und Wasser auf die erfindungsgemäße Weise auch deswegen außerordentlich überraschend, weil bekanntermaßen (vgl. DE-AS 2 245 634 sowie K. Sasse in Houben-Weyl, Methoden der org. Chemie, G. Thieme Verlag Stuttgart, 1963, Bd. XII/1, S. 127) Phosphinoxide mit Säuren wie sie beim Einleiten von Chlor in Wasser entstehen (HCl, HOCl) recht stabile Salze bilden.

Als Ausgangsstoffe für das erfindungsgemäße Verfahren kommen im Prinzip alle möglichen 1-Oxo-phospholene mit der Doppelbindung in $\Delta^2$- oder $\Delta^3$-Stellung des P-haltigen 5-Rings und mit einem organischenRest oder einem über Sauerstoff gebunden organischen Rest am Phosphor in Frage ; bevorzugt ist jedoch der Einsatz der unter die Formeln IIIa und IIIb fallenden 1-Oxo-phospholene:

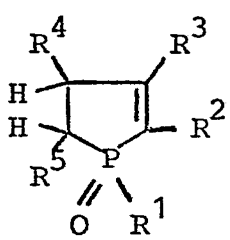 (IIIa)

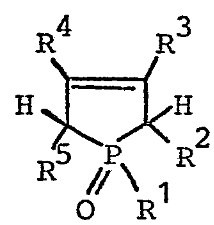 (IIIb)

(1-Oxo-$\Delta^2$-phospholene) (1-Oxo-$\Delta^3$-phospholene)

worin $R^1$ = $(C_1-C_{12})$-Alkyl, ggf. subst. durch Cl und/oder Br
$(C_1-C_{12})$-Alkoxy, ggf. subst. durch Cl und/oder Br
Cyclopentyl, Cyclohexyl, Phenyl, Naphthyl, Cyclopentoxy, Cyclohexoxy, Phenoxy, Naphthoxy } ggf. subst. durch $(C_1-C_4)$-Alkyl, $(C_1-C_4)$-Alkoxy, Cl und/oder Brom

$R^2$, $R^3$, $R^4$, $R^5$ = unabhängig voneinander H, $(C_1-C_4)$-Alkyl, $(C_1-C_4)$-Alkoxy, Phenyl, Cl, Br.

Besonders bevorzugte Ausgangsstoffe sind solche 1-Oxo-phospholene der Formeln IIIa und IIIb, in welchen
$R^1$ = $(C_1-C_4)$-Alkyl, ggf. subst. durch Cl und/oder Br, $(C_1-C_4)$-Alkoxy, ggf. subst. durch Cl und/oder Br; oder Phenyl,
$R^2$ = $R^5$ = H und
$R^3$, $R^4$ = unabhängig voneinander H, $CH_3$.

Wenn die für $R^1$ genannten Gruppen noch substituiert sind, sind sie vorzugsweise einmal substituiert.

Als unter die Formeln IIIa und IIIb fallende konkrete 1-Oxo-phospholene seien in beispielhafter Weise genannt: 1-Methyl-1-oxo-$\Delta^2$ ($\Delta^3$)-phospholen, 1-Äthyl-1-oxo-$\Delta^2$ ($\Delta^3$)-phospholen, 1-Propyl-1-oxo-$\Delta^2$ ($\Delta^3$)-phsopholen, 1-Butyl-1-oxo-$\Delta^2$ ($\Delta^3$)-phospholen, 1-Phenyl-1-oxo-$\Delta^2$ ($\Delta^3$)-phospholen, 1-Chlormethyl-1-oxo-$\Delta^2$ ($\Delta^3$)-phospholen, 1,3-Dimethyl-1-oxo-$\Delta^2$ ($\Delta^3$)-phospholen, 1-Äthyl-3-methyl-1-oxo-$\Delta^2$ ($\Delta^3$)-phospholen, 3-Methyl-1-phenyl-1-oxo-$\Delta^2$ ($\Delta^3$)-phospholen, 1,3,4-Trimethyl-1-oxo-$\Delta^2$ ($\Delta^3$)-phospholen, 1-Äthyl-3,4-dimethyl-1-oxo-$\Delta^2$ ($\Delta^3$)-phospholen, 3,4-Dimethyl-1-phenyl-1-oxo-$\Delta^2$ ($\Delta^3$)-phospholen sowie 1-Methoxy-1-oxo-$\Delta^2$ ($\Delta^3$)-phsopholen, 1-Äthoxy-1-oxo-$\Delta^2$ ($\Delta^3$)-phospholen, 1-Butoxy-1-oxo-$\Delta^2$ ($\Delta^3$)-phospholen, 1-Phenoxy-1-oxo-$\Delta^2$ ($\Delta^3$)-phospholen, 1-ß-Chloräthoxy-1-oxo-$\Delta^2$ ($\Delta^3$)-phospholen etc. Sie sind nach bekannten Verfahren zugänglich (K.Sasse in: Houben-Weyl, Methoden der org.

Chemie, G. Thieme Verlag Stuttgart 1963, Bd. XII/1, S.138 ff; DE-AS 2 036 173; sowie K. Hasserodt, K. Hunger und F. Korte, Tetrahedron 1963, 1563).

Es ist selbstverständlich auch möglich, ein Gemisch der $\Delta^2$- und $\Delta^3$-isomeren 1-Oxo-phospholene einzusetzen; das erfindungsgemäße Verfahren liefert dann ein Gemisch der entsprechenden 2-Chlor-3-hydroxy- und 3-Chlor-4-hydroxy-1-oxo-phospholane. Der Einsatz eines Gemisches der $\Delta^2$- und $\Delta^3$-isomeren 1-Oxo-phospholene bietet sich vor allem dann an, wenn nach dem zur Herstellung der 1-Oxo-phospholene angewandten Verfahren schon ein solches Isomerengemisch entsteht (vgl. z.B. DE-PS 1 192 204 sowie DE-AS 2 036 173) und wenn das nun daraus entstehende Gemisch von isomeren 1-Oxo-phospholan-chlorhydrinen als solches weiter verwendbar oder ohne besonderen Aufwand trennbar ist.

Als Chlorquelle kommt vorzugsweise gasförmiges Chlor zum Einsatz, jedoch ist auch etwa eine wässrige Lösung von Chlor anwendbar.

Als chlorwasserstoffbindende Basen kommen praktisch alle für derartige Zwecke üblichen basischen Stoffe in Frage; vorzugsweise werden Alkalihydroxide, -carbonate, -hydrogencarbonate, Ammoniak und/oder niedere aliphatische Amine verwendet. Besonders bevorzugt sind Natriumhydroxid, Kaliumhydroxid, Natriumcarbonat, Kaliumcarbonat, Natriumhydrogencarbonat, Ammoniak, Äthylamin, Diäthylamin, Triäthylamin, Di-i-propylamin, n-Butylamin, etc.

Brauchbare mit Wasser mischbare, (gegenüber den Ausgangs- und Endverbindungen) inerte organische Lösungsmittel sind vorzugsweise niedere ($C_1$-$C_4$)-Alkohole, niedere aliphatische Ketone und/oder wasserlösliche Äther, z.B. Methanol, Äthanol, n- und i-Propanol, Aceton, Dioxan, etc.

Das erfindungsgemäße Verfahren kann in einem relativ weiten Temperaturbereich durchgeführt werden. Allgemein wird im Temperaturbereich von etwa -10 bis +100°C gearbeitet; bevorzugt ist ein Temperaturbereich zwischen etwa 0 und 50°C.

Die Reaktionsdauer liegt im Durchschnitt bei einigen Minuten. Im allgemeinen verläuft die Reaktion spontan bei leichter Erwärmung. Eine Außenkühlung kann verwendet werden, ist jedoch nicht unbedingt erforderlich.

Das Verhältnis von Lösungsmittel zur Summe der Reaktionspartner kann in einem relativ weiten Bereich variiert werden. Allgemein wird ein Gewichtsverhältnis von etwa 1:1 bis etwa 20:1 (Lösungsmittel zur Summe der Reaktionspartner), bevorzugt ein Verhältnis von etwa 2:1 bis etwa 4:1, verwendet.

Es wird im allgemeinen etwa derart gearbeitet, daß die Lösung eines oder mehrerer Reaktionspartner vorgelegt und die übrigen Komponenten gleichzeitig oder nacheinander zugetropft werden. Bevorzugt wird das 1-Oxo-phospholen in Wasser oder einme Gemisch aus Wasser und einem der genannten, mit Wasser mischbaren inerten organischen Lösungsmittel vorgelegt und Chlor und die Chlorwasserstoff bindende Base gleichzeitig zugegeben; besonders bevorzugt wird die Zugabe von Chlor und Base so vorgenommen, daß in der Reaktionslösung stets ein pH von etwa 2 bis 9 aufrecht erhalten wird. Selbstverständlich kann im Einzelfall jedoch eine andere Reihenfolge der Zugabe der Komponenten zweckmäßig sein und ist daher möglich.

Die Reaktionspartner 1-Oxo-phospholen, Chlor und chlorwasserstoffbindende Base werden zweckmäßig im Molverhältnis von etwa 1:1:1 eingesetzt, doch kann auch jeder der Reaktionspartner im Überschuß vorliegen. Die 4. Reaktionskomponente

- Wasser - wird im allgemeinen im Überschuß verwendet, da sie außerdem als Lösungsmittel mit oder ohne entsprechendes inertes organisches Lösungmittel eingesetzt wird. Nach Beendigung der Reaktion ist es ferner zweckmäßig, die Reaktionslösung zu neutralisieren.

Die Aufarbeitung des Reaktionsansatzes erfolgt nach bekannten Methoden. Bei wasserlöslichen Produkten wird das Lösungsmittel unter vermindertem Druck oder bei Normaldruck entfernt und der Rückstand durch Filtration oder Zentrifugieren vom Salzniederschlag befreit. Bei Produkten, die sich direkt aus der Reaktionsmischung abscheiden, wird im allgemeinen eine Filtration mit oder ohne Druck oder eine Extraktion mit einem geeigneten organischen Lösungsmittel durchgeführt. Nach Entfernen des Lösungsmittels kristallisieren die 1-Oxo-phospholan-chlorhydrine dann in reiner Form aus. In einigen Fällen kommt es bei der Durchführung des erfindungsgemäßen Verfahrens auch zur Bildung von strukturisomeren 1-Oxo-phospholan-chlorhydrinen, die aufgrund der verschiedenen Eigenschaften wie unterschiedliche Löslichkeit etc. aus dem Reaktionsgemisch getrennt isoliert werden können, falls dies erwünscht ist (vgl. etwa die Beispiele 9 und 19).

Eine weitere Reinigung ist an sich nicht erforderlich, kann aber gewünschtenfalls nach bekannten Methoden (Umkristallisation, Umfällen etc.) durchgeführt werden. Gegenüber der anfangs erwähnten Verfahrensweise von B.A.Arkuzov et al. a.a.O. ist das erfindungsgemäße Verfahren einfacher und wirtschaftlicher, da es - ausgehend von 1-Oxo-phospholenen - die Herstellung der entsprechenden 1-Oxo-phospholan-chlorhydrine im Einstufenverfahren ohne Isolierung einer Zwischenstufe in ausgezeichneten Ausbeuten ohne einen nennenswerten Aufwand erlaubt. Außerdem gestattet das Verfahren auch die Herstellung einer Reihe von neuen Verbindungen.

Formelmäßig läßt sich das Verfahren - wenn man von 1-Oxo-phospholenen der Formeln IIIa und IIIb ausgeht - wie folgt darstellen (Gl 2a und 2b; B = Base):

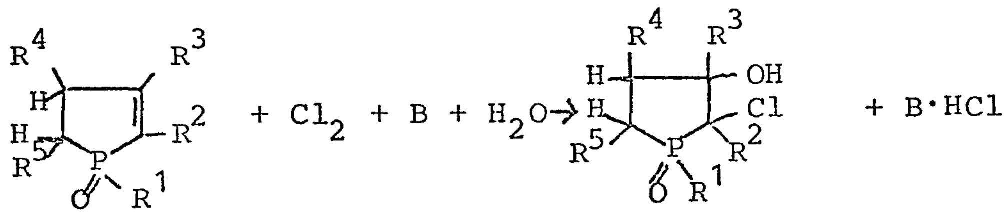


(IIIa) (IVa)

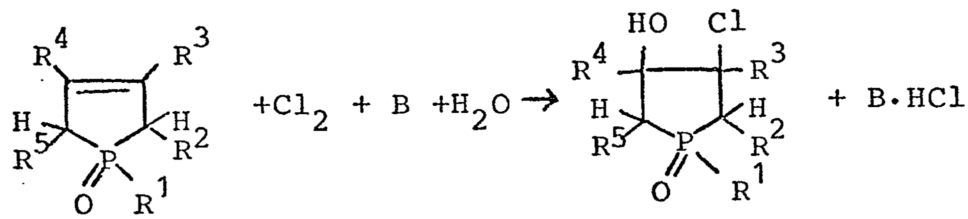


(IIIb) (IVb)

In den Formeln besitzen die Reste $R^1$ -$R^5$ die beim erstmaligen Vorkommen der Formeln IIIa und IIIb angegebene Bedeutung. Die 1-Oxo-phospholan-chlorhydrine IVa und IVb sind neu mit Ausnahme des Falles

$R^1$ = $C_6H_5$

$R^2$ = $R^5$ = H

$R^3$ = $R^4$ = $CH_3$.

Bevorzugte neue Verbindungen IVa und IVb sind diejenigen mit

$R^1$ = $(C_1-C_4)$-Alkyl, ggf. subst.- vorz. 1 x subst. - durch Cl und/oder Br;

$(C_1-C_4)$-Alkoxy, ggf. subst. - vorz. 1 x subst. - durch Cl und/oder Br;

$R^2$ = $R^5$ = H,

$R^3$, $R^4$ = unabhängig voneinander = H, $CH_3$, sowie

$R^1 = C_6H_5$,
$R^2$, $R^3$, $R^4$, $R^5$ = H.

Die Verbindungen sind wertvolle Zwischenprodukte zur Herstellung von 2,3- bzw. 3,4-Epoxy-1-oxo-phospholanen. Die Überführung in diese Epoxyverbindungen kann nach den zur Herstellung von Epoxiden aus 1,2-Chlorhydrinen bekannten Methoden (mittels Basen) erfolgen; vgl. z.B. G. Dittus in Houben-Weyl, Methoden der org. Chemie, G. Thieme Verlag Stuttgart 1965, Bd. VI/3, S. 374 ff.

Diese Epoxyverbindungen werden verwendet wie dies für andere phosphorhaltige Epoxide bekannt ist, u.a. als thermisch stabile Copolymere (US-PS 2 770 610), als Hydraulikflüssigkeiten (US-PS 2 826 592), als Additive bei Vinylpolymeren (US-PS 2 956 369) etc. Die 3,4-Epoxy-1-oxo-phospholane speziell sind außerdem wichtige Zwischenprodukte zur Herstellung der entsprechenden 3,4-Dihydroxy-1-oxo-phospholane, die - in Polymere eingebaut - als wirksame Katalysatoren zur Umwandlung von Isocyanaten in Carbodiimide technische und wirtschaftliche Bedeutung besitzen (DE-OS 26 02 646).

Die Erfindung wird nun anhand der folgenden Beispiele weiter erläutert.

Beispiel 1

In eine Lösung von 116 g (1.0 Mol) 1-Methyl-1-oxo-$\Delta^3$-phospholen in 300 ml Wasser werden unter Außenkühlung bei 20 - 25°C 71,0 g (1.0 Mol) Chlor geleitet. Gleichzeitig wird eine Lösung von 53 g (0.5 Mol) Natriumcarbonat in 150 ml Wasser so zugetropft, daß der pH-Wert des Reaktionsgemisches stets zwischen 4 und 8 bleibt. Anschließend wird neutralisiert, Wasser bei 40°C/1,6 $10^{-2}$ bar abgezogen und der Rückstand mit 150 ml Methylenchlorid verrührt. Filtrieren vom

ausgefallenen Salz und Entfernen des Lösungsmittels bei 30°C/2,0·$10^{-2}$ bar liefert 166 g (98,5 %) 3-Chlor-4-hydroxy-1-methyl-1-oxo-phospholan als farblose Kristalle vom Fp. 134 - 136°C (aus Aceton).

| | | | | | |
|---|---|---|---|---|---|
| $C_5H_{10}ClO_2P$ (168,56) | Ber. | C 35,63 | H 5,98 | Cl 21,03 | P 18,38 |
| | Gef. | C 35,6 | H 5,8 | Cl 21,0 | P 18,6 |

Beispiel 2:

Beispiel 1 wird wiederholt, nur daß die Zugabe der Natriumcarbonatlösung nach Einleiten des Chlors erfolgt. Die Aufarbeitung liefert dann 85 g (50,4 %) 3-Chlor-4-hydroxy-1-methyl-1-oxo-phospholan.

Beispiel 3:

Beispiel 1 wird wiederholt, nur daß die Zugabe der Natriumcarbonatlösung vor Einleiten des Chlors erfolgt. Die Aufarbeitung liefert dann 114 g (67,6 %) 3-Chlor-4-hydroxy-1-methyl-1-oxo-phospholan.

Der Vergleich der Beispiele 1 bis 3 zeigt, daß die Ausbeute an 3-Chlor-4-hydroxy-1-methyl-1-oxo-phospholan durch Aufrechterhalten eines bestimmten pH-Bereiches in der Reaktionsmischung gesteigert werden kann, jedoch ist die Reihenfolge der Zugabe der Komponenten prinzipiell für das erfindungsgemäße Verfahren nicht kritisch.

Beispiel 4:

Beispiel 1 wird wiederholt, nur daß statt Natriumcarbonat 40 g (1.0 Mol) Natriumhydroxid verwendet werden. Die Aufarbeitung liefert dann 158 g (93,7 %) 3-Chlor-4-hydroxy-1-methyl-1-oxo-phospholan.

Der Vergleich der Beispiele 1 und 4 zeigt, daß bei dem erfindungsgemäßen Verfahren die Art der verwendeten Base nicht kritisch ist.

Beispiel 5:

Beispiel 1 wird wiederholt, nur daß eine Außenkühlung unterbleibt. Die Reaktionstemperatur steigt dann bis auf 45°C an. Die Aufarbeitung liefert 162 g (96,1 %) 3-Chlor-4-hydroxy-1-methyl-1-oxo-phospholan.

Der Vergleich der Beispiele 1 und 5 zeigt, daß die Temperatur der Reaktionsmischung für das erfindungsgemäße Verfahren nicht kritisch ist.

Beispiel 6:

In eine Lösung von 65 g (0.5 Mol) 1,3-Dimethyl-1-oxo-$\Delta^3$-phospholen in 150 ml Wasser werden unter Außenkühlung bei 20 - 25°C 35,5 g (0.5 Mol) Chlor geleitet. Gleichzeitig wird eine Lösung von 26,5 g (0.25 Mol) Natriumcarbonat in 100 ml Wasser so zugetropft, daß der pH-Wert des Reaktionsgemisches stets zwischen 4 und 8 bleibt, Anschließend wird neutralisiert, Wasser bei 40°C/$1.6\cdot 10^{-2}$ bar abgezogen und der Rückstand mit 100 ml Methylenchlorid verrührt. Filtrieren vom ausgefallenen Salz und Entfernen des Lösungsmittels bei 30°C/$2,0\cdot 10^{-2}$ bar liefert 89 g (97,5 %) 3-Chlor-1,4-dimethyl,4-hydroxy-1-oxo-phospholan als farblose Kristalle vom Fp. 126 - 127°C (aus Äthylacetat).

| | | | | | |
|---|---|---|---|---|---|
| $C_6H_{12}ClO_2P$ (182,59) | Ber. | C 39,47 | H 6,62 | Cl 19,42 | P 16,96 |
| | Gef. | C 39,7 | H 6,4 | Cl 19,6 | P 17,0. |

Beispiel 7:

In eine Lösung von 89 g (0.5 Mol) 1-Phenyl-1-oxo-$\Delta^3$-phospholen in 150 ml Wasser werden unter Außenkühlung bei 20 - 25°C 35,5 g (0.5 Mol) Chlor geleitet. Gleichzeitig

wird eine Lösung von 26,5 g (0.25 Mol) Natriumcarbonat in 100 ml Wasser so zugetropft, daß der pH-Wert des Reaktionsgemisches stets zwischen 4 und 8 bleibt. Anschließend wird neutralisiert, Wasser bei 40°C/1,6·$10^{-2}$ bar abgezogen und der Rückstand mit 100 ml Methylenchlorid verrührt. Filtrieren vom ausgefallenen Salz und Entfernen des Lösungsmittels bei 30°C/2,0·$10^{-2}$ bar liefert 99 g (85,9 %) 3-Chlor-4-hydroxy-1-phenyl-1-oxo-phospholan als farblose Kristalle vom Fp. 138°C (aus Acetonitril).

| | | | | | |
|---|---|---|---|---|---|
| $C_{10}H_{12}ClO_2P$ (230,63) | Ber. | C 52,08 | H 5,24 | Cl 15,37 | P 13,43 |
| | Gef. | C 51,8 | H 5,1 | Cl 15,6 | P 13,5 |

Beispiel 8:

In eine Lösung von 103 g (0.5 Mol) 3,4-Dimethyl-1-phenyl-1-oxo-$\Delta^3$-phospholen in 150 ml Wasser werden unter Außenkühlung bei 20 - 25°C 35,5 g (0.5 Mol) Chlor geleitet. Gleichzeitig wird eine Lösung von 26,5 g (0.25 Mol) Natriumcarbonat in 100 ml Wasser so zugetropft, daß der pH-Wert des Reaktionsgemisches stets zwischen 5 und 7 bleibt. Anschlißeßend wird neutralisiert und das ausgefallene Produkt abgesaugt. Ausbeute 119 g (92,0 %) 3-Chlor-3,4-dimethyl-4-hydroxy-1-phenyl-1-oxo-phospholan als farblose Kristalle vom Fp. 176°C (aus Dioxan).

| | | | | | |
|---|---|---|---|---|---|
| $C_{12}H_{16}ClO_2P$ (258,69) | Ber. | C 55,72 | H 6,23 | Cl 13,70 | P 11,97 |
| | Gef. | C 55,7 | H 6,0 | Cl 13,6 | P 12,1. |

Beispiel 9:

In eine Lösung von 96 g (0.5 Mol) 3-Methyl-1-phenyl-1-oxo-$\Delta^3$-phospholen in 150 ml Wasser werden unter Außenkühlung bei 20 - 25°C 35,5 g (0.5 Mol) Chlor geleitet. Gleichzeitig wird eine Lösung von 26,5 g (0.25 Mol) Natriumcarbonat in 100 ml Wasser so zugetropft, daß der pH-Wert des Reaktionsgemisches stets zwischen 4 und 7 bleibt. Anschließend wird neutralisiert und Wasser bei 40°C/1,6·$10^{-2}$

bar abgezogen und der Rückstand mit 100 ml Methylenchlorid verrührt. Filtrieren vom ausgefallenen Salz und Entfernen des Lösungsmittels bei 30°C/2,0·$10^{-2}$ bar liefert 117 g (95,7 %) eines Isomerengemisches von 3-Chlor-4-hydroxy-4-methyl-1-phenyl-1-oxo-phospholanen. Verrühren des Gemisches mit 100 ml Äthylacetat und Absaugen liefert ein Isomer als farblose Kristalle vom Fp. 174 - 175°C (aus Propanol (2))

$C_{11}H_{12}ClO_2P$ (244,66) Ber. C 54,00 H 5,77, Cl 14,49 P 12,66
Gef. C 53,7 H 5,5 Cl 14,4 P 12,7

Eindampfen des Filtrats bei 30°C/2,0·$10^{-2}$ bar, Verreiben des Rückstandes mit 50 ml Äther und Absaugen liefert das andere Isomere als farblose Kristalle vom Fp. 134°C (aus Äthylacetat/Äther 1:2).

$C_{11}H_{12}ClO_2P$ (244,66) Ber. C 54,00 H 5,77 Cl 14,49 P 12,66
Gef. C 53,9 H 5,6 Cl 14,3 P 12,6

Beispiel 10:

Analog Beispiel 9 werden 96 g (0.5 Mol) 3-Methyl-1-phenyl-1-oxo-$\Delta^2$-phospholen in 150 ml Wasser mit 35,5 g (0.5 Mol) Chlor und 26,5 g (0.25 Mol) Natriumcarbonat in 100 ml Wasser umgesetzt und aufgearbeitet. Die Aufarbeitung liefert 118 g (96,5 %) 2-Chlor-3-hydroxy-3-methyl-1-phenyl-1-oxo-phospholan als farblose Kristalle vom Fp. 173°C (aus Propanol (2)).

$C_{11}H_{12}ClO_2P$ (244,66) Ber. C 54,00 H 5,77 Cl 14,49 P 12,66
Gef. C 53,6 H 5,8 Cl 14,7 P 12,7

Der Vergleich der Beispiele 9 und 10 zeigt, daß bei dem erfindungsgemäßen Verfahren 1-Oxo-$\Delta^2$- und 1-Oxo-$\Delta^3$-phsopholene in gleicher Weise eingesetzt werden können (zum Einsatz von Mischungen aus beiden Isomeren s. Beispiele 14 und 15).

Beispiel 11:

Analog Beispiel 6 werden 66 g (0.5 Mol) 1-Methoxy-1-oxo-$\Delta^3$-phospholen in 150 ml Wasser mit 35,5 g (0.5 Mol) Chlor und 26,5 g (0,25 Mol) Natriumcarbonat in 100 ml Wasser umgesetzt und aufgearbeitet.

Die Aufarbeitung liefert 91 g (98,6 %) 3-Chlor-4-hydroxy-1-methoxy-1-oxo-phospholan als farbloses Öl, welches nach längerem Stehen durchkristllisiert. Aus Äthylacetat farblose Kristalle vom Fp. 82°C.

| | | | | | | |
|---|---|---|---|---|---|---|
| $C_5H_{10}ClO_3P$ | (184,56) | Ber. | C 32,54 | H 5,46 | Cl 19,21 | P 16,78 |
| | | Gef. | C 32,2 | H 5,4 | Cl 19,4 | P 16,3 |

Beispiel 12:

Analog Beispiel 6 werden 73 g (0.5 Mol) 1-Äthoxy-1-oxo-$\Delta^3$-phospholen in 150 ml Wasser mit 35,5 g (0.5 Mol) Chlor und 26,5 g (0.25 Mol) Natriumcarbonat in 100 ml Wasser umgesetzt und aufgearbeitet. Die Aufarbeitung liefert 95 g (95,7 %) 1-Äthoxy-3-chlor-4-hydroxy-1-oxo-phospholan als farblose Kristalle vom Fp. 98°C (aus Äther bei -70°C).

| | | | | | | |
|---|---|---|---|---|---|---|
| $C_6H_{12}ClO_3P$ | (198,59) | Ber. | C 36,29 | H 6,09 | Cl 17,58 | P 15,60 |
| | | Gef. | C 36,1 | H 5,9 | Cl 17,9 | P 15,3 |

Beispiel 13:

Beispiel 12 wurde wiederholt, nur daß als Lösungsmittel 200 ml eines 1:1 Gemisches aus Wasser und Äthanol verwendet werden. Die Aufarbeitung liefert dann 96 g (96,7 %) 1-Äthoxy-3-chlor-4-hydroxy-1-oxo-phospholan.

Der Vergleich der Beispiele 12 und 13 zeigt, daß bei dem erfindungsgemäßen Verfahren auch Gemische von Wasser mit geeigneten organischen Lösungsmitteln eingesetzt werden können, ohne daß die Ausbeute an 1-Äthoxy-3-chlor-4-hydroxy-1-oxo-phospholan vermindert wird.

Beispiel 14:

Analog Beispiel 6 werden 80 g (0.5 Mol) 1-i-Propoxy-1-oxo-

$\Delta^3$-phospholen in 150 ml Wasser mit 35,5 g (0.5 Mol) Chlor und 26,5 g (0.25 Mol) Natriumcarbonat in 100 ml Wasser umgesetzt und aufgearbeitet. Die Aufarbeitung liefert 98 g (92,2 %) 3-Chlor-4-hydroxy-1-i-propoxy-1-oxo-phospholan als farblose Kristalle vom Fp. 104 - 106°C (aus Äther bei -70°C).

| | | | | | |
|---|---|---|---|---|---|
| $C_7H_{14}ClO_3P$ (212,62) | Ber. | C 39,55 | H 6,64 | Cl 16,68 | P 14,57 |
| | Gef. | C 39,3 | H 6,8 | Cl 17,0 | P 14,6 |

<u>Beispiel 15</u>:

Beispiel 14 wird wiederholt, nur daß statt isomerenreinem 1-i-Propoxy-1-oxo-$\Delta^3$-phospholen 80 g (0.5 Mol eines Gemisches aus 60,9 % 1-i-Propoxy-1-oxo-$\Delta^3$- und 39,1 % 1-i-Propoxy-1-oxo-$\Delta^2$-phospholen umgesetzt werden. Die Aufarbeitung liefert dann 104 g (97,8 % eines Gemisches aus 3-Chlor-4-hydroxy- und 2-Chlor-3-hydroxy-1-i-propoxy-1-oxo-phospholans als farbloses, erstarrendes Öl.

| | | | | | |
|---|---|---|---|---|---|
| $C_7H_{14}ClO_3P$ (212,62) | Ber. | C 39,55 | H 6,64 | Cl 16,68 | P 14,57 |
| | Gef. | C 39,0 | H 6,5 | Cl 16,7 | P 14,2 |

Der Vergleich der Beispiele 14 und 15 zeigt, daß das erfindungsgemäße Verfahren auch mit Gemischen aus isomeren $\Delta^2$- bzw. $\Delta^3$-Phospholenen durchgeführt werden kann. Man erhält dann Gemische aus 3-Chlor-4-hydroxy- und 2-Chlor-3-hydroxy-1-oxo-phospholanen.

<u>Beispiel 16</u>:

In eine Lösung von 90,3 g (0.5 Mol) 1-ß-Chloräthoxy-1-oxo-$\Delta^3$-phospholen in 150 ml Wasser werden unter Außenkühlung 35,5 g (0.5 Mol) Chlor geleitet. Gleichzeitig wird eine Lösung von 26,5 g (0.25 Mol) Natriumcarbonat in 100 ml Wasser so zugetropft, daß der pH-Wert des Reaktionsgemisches stets zwischen 6 und 7 bleibt. Anschließend wird das entstandene Öl abgetrennt, die wässrige Phase 3mal mit je 50 ml Methylenchlorid extrahiert, das abgetrennte Öl mit den organischen Extrakten vereinigt und über Natriumsulfat getrocknet. Filtrieren vom Trocknungsmittel und Entfernen des Lösungsmittels bei 30°C/2,o·$10^{-2}$ bar liefert 99 g (85,0 %) 3-Chlor-1-ß-chloräthoxy-4-hydroxy-1-oxo-phospholan als farbloses Öl, welches bei längerem Stehenlassen erstarrt.

| | | | | | |
|---|---|---|---|---|---|
| $C_6H_{11}Cl_2O_3P$ (233,03) | Ber. | C 30,93 | H 4,76 | Cl 30,43 | P 13,29 |
| | Gef. | C 30,9 | H 4,7 | Cl 30,8 | P 13,0 |

Beispiel 17:

Analog Beispiel 16 werden 80 g (0.5 Mol) 1-Äthoxy-3-methyl-1-oxo-$\Delta^3$-phsopholen in 150 ml Wasser mit 36,6 g (0.5 Mol) Chlor und 26,5 g (0.25 Mol) Natriumcarbonat in 100 ml Wasser umgesetzt und aufgearbeitet. Die Aufarbeitung liefert 104 g (97,9 %) 1-Äthoxy-3-chlor-4-hydroxy-4-methyl-1-oxo-phospholan als farblose Kristalle vom Fp. 105°C (aus Äther bei -70°C).

| | | | | | |
|---|---|---|---|---|---|
| $C_7H_{14}ClO_3P$ (212,62) | Ber. | C 39,55 | H 6,64 | Cl 16,68 | P 14,57 |
| | Gef. | C 39,5 | H 6,6 | Cl 17,0 | P 14,6 |

Beispiel 18:

Analog Beispiel 17 werden 80 g (0.5 Mol) 1-Äthoxy-3-methyl-1-oxo-$\Delta^2$-phospholen in 150 ml Wasser mit 35,5 g (0.5 Mol) Chlor und 26,5 g (0.25 Mol) Natriumcarbonat in 100 ml Wasser umgesetzt und aufgearbeitet. Die Aufarbeitung liefert 104 g (97,9 %) 1-Äthoxy-2-chlor-3-hydroxy-3-methyl-1-oxo-phospholan als farbloses Öl vom Kp 172°C/1,33·$10^{-5}$ bar.

| | | | | | |
|---|---|---|---|---|---|
| $C_7H_{14}ClO_3P$ (212,62) | Ber. | C 39,55 | H 6,64 | Cl 16,68 | P 14,57 |
| | Gef. | C 39,2 | H 6,3 | Cl 17,1 | P 14,2 |

Zum Vergleich der Beispiele 17 und 18 s. Bermerkung bei Beispiel 10.

Beispiel 19:

In eine Lösung von 80 g (0.5 Mol) 3,4-Dimethyl-1-methoxy-1-oxo-$\Delta^3$-phsopholen in 150 ml Wasser werden unter Außenkühlung 35,5 g (0.5 Mol) Chlor geleitet. Gleichzeitig wird

eine Lösung von 26,5 g (0.25 Mol) Natriumcarbonat in 100 ml Wasser so zugetropft, daß der pH-Wert der Lösung stets zwischen 5 und7 bleibt. Absaugen liefert 48 g (45,2 %) eines Isomers von 3-Chlor-3,4-dimethyl-4-hydroxy-1-methoxy-1-oxo-phospholan als farblose Kristalle vom Fp. 183°C (aus Propanol(2)).

$C_7H_{14}ClO_3P$ (212,62) Ber. C 39,55 H 6,64 Cl 16,68 P 14,57
Gef. C 39,3 H 6,6 Cl 16,7 P 14,5

Eindampfen des Filtrats bei 40°C/1,6·$10^{-2}$ bar, Verrühren des Rückstandes mit 100 ml Methylenchlorid, Absaugen des ausgefallenen Salzes und Einengen des Filtrats bei 30°C/2,0·$10^{-2}$ bar liefert 53 g (49,8 %) eines weiteren Isomeren von 3-Chlor-3,4-dimethyl-4-hydroxy-1-methoxy-1-oxo-phospholan als farblose Kristalle vom Fp. 159°C (aus Aceton).

$C_7H_{14}ClO_3O$ (212,62) Ber. C 39,55 H 6,64 Cl 16,68 P 14,57
Gef. C 39,7 H 6,5 Cl 16,4 P 14,6

Zur Entstehung zweier isomerer 3-Chlor-4-hydroxy--1-oxo-phospholane beim erfindungsgemäßen Verfahren vgl. auch Beispiel 9.

Beispiel 20:

Analog Beispiel 6 werden 87 g (0.5 Mol 1-Äthoxy-3,4-dimethyl-1-oxo-$\Delta^3$-phsopholen in 150 ml Wasser mit 35,5 g (0.5 Mol) Chlor und 26,5 g (0.25 Mol) Natriumcarbonat in 100 ml Wasser umgesetzt und aufgearbeitet. Die Aufarbeitung liefert 103 g (90,9 %) 1-Äthoxy-3-chlor-3,4-dimethyl-4-hydroxy-1-oxo-phospholan als farblose Kristalle vom Fp. 134°C (aus Äthylacetat).

$C_8H_{16}ClO_3P$ (226,64) Ber. C 42,40 H 7,12 Cl 15,64 P 13,67
Gef. 42,4 H 7,1 Cl 15,7 P 13,7.

Patentansprüche:

1. Verfahren zur Herstellung von 1-Oxo-phospholan-chlorhydrinen, ausgehend von 1-Oxo-phospholenen, dadurch gekennzeichnet, daß man 1-Oxo-phospholene mit Chlor in Gegenwart von Chlorwasserstoff bindenden Basen im Molverhältnis von etwa 1:1:1 in Wasser, gegegebenenfalls im Gemisch mit einem mit Wasser mischbaren inerten organischen Lösungsmittel, umsetzt.

2. Verfahren nach Anspruch 1, dadurch gekennzeichnet, daß man als 1-Oxo-phospholene verbindungen der Formel IIIa und/oder IIIb verwendet:

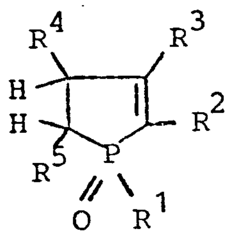

(IIIa)

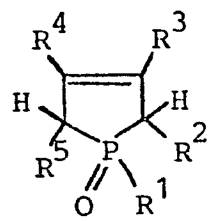

(IIIb)

(1-Oxo-$\Delta^2$-phospholene) (1-Oxo-$\Delta^3$-phospholene)

worin $R^1$ = $(C_1-C_{12})$-Alkyl, ggf. subst. durch Cl und/oder Br,
$(C_1-C_{12})$-Alkoxy, ggf. subst. durch Cl und/oder Br,
Cyclopentyl, Cyclohexyl, Phenyl, Naphthyl, Cyclopentoxy, Cyclohexoxy, Phenoxy, Naphthoxy } ggf. subst. durch $(C_1-C_4)$-Alkyl, $(C_1-C_4)$-Alkoxy, Cl und/oder Brom

$R^2$, $R^3$, $R^4$, $R^5$ = unabhängig voneinander H, $(C_1-C_4)$-Alkyl, $(C_1-C_4)$-Alkoxy, Phenyl, Cl, Br,

bedeuten

3. Verfahren nach den Ansprüchen 1 bis 2, dadurch gekennzeichnet, daß man als 1-Oxo-phospholene solche Verbindungen der Formeln IIIa und/oder IIIb verwendet, in denen

$R^1$ = $(C_1-C_4)$-Alkyl, ggf. subst. durch Cl und/oder Br, $(C_1-C_4)$-Alkoxy, ggf. subst. durch Cl und/oder Br, oder Phenyl,

$R^2$ = $R^5$ = H und

$R^3$, $R^4$ = unabhängig voneinander H, $CH_3$

bedeuten.

4. Verfahren nach den Ansprüchen 1 bis 3, dadurch gekennzeichnet, daß man als Chlorwasserstoff bindende Basen Alkalihydroxide, -carbonate, -hydrogencarbonate, Ammoniak und/oder niedere aliphatische Amine verwendet.

5. Verfahren nach den Ansprüchen 1 bis 4, dadurch gekennzeichnet, daß man als mit Wasser mischbare inerte organische Lösungsmittel niedere Alkohole, niedere aliphatische Ketone und/oder wasserlösliche Äther verwendet.

6. Verfahren nach den Ansprüchen 1 bis 5, dadurch gekennzeichnet, daß man die Umsetzung im Temperaturbereich von etwa -10 bis +100°C, vorzugsweise von etwa 0 bis +50°C, durchführt.

7. Verfahren nach den Ansprüchen 1 bis 6, dadurch gekennzeichnet, daß man während er Umsetzung einen pH-Bereich von etwa 3 bis 9 aufrechterhält.

8. 1-Oxo-phospholan-chlorhydrine der Formeln IVa und IVb:

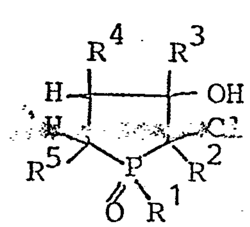

(IVa)

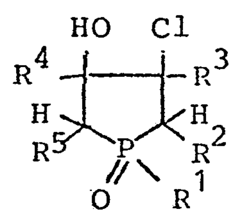

(IVb)

worin die Reste $R^1$ bis $R^5$ die in Anspruch 2 bei den Formeln IIIa und IIIb genannte Bedeutung besitzen, mit Ausnahme des Falles

$R^1 = C_6H_5$
$R^2 = R^5 = H$
$R^3 = R^4 = CH_3$.

9. 1-Oxo-phospholan-chlorhydrine nach Anspruch 8, dadurch gekennzeichnet, daß in den Formeln IVa und IVb die Reste $R^1$ bis $R^5$ folgende Bedeutung besitzen:

$R^1$ = $(C_1-C_4)$-Alkyl, ggf. subst. - vorz. 1x subst. - durch Cl und/oder Br,
$(C_1-C_4)$-Alkoxy, ggf. subst. - vorz. 1x subst, - durch Cl und/oder Br,
$R^2 = R^5 = H$
$R^3$, $R^4$ = unabhängig voneinander = H, $CH_3$,
sowie $R^1 = C_6H_5$,
$R^2$, $R^3$, $R^4$, $R^5$ = H.